# EUROPÄISCHE PATENTANMELDUNG

(11) **EP 2 210 793 A2**
(43) Veröffentlichungstag der Anmeldung: **28.07.2010**
(21) Anmeldenummer: 09013093.1
(22) Anmeldetag: 16.10.2009
(51) Int. Cl.: B62B 3/00, B62B 5/02

(54) **Transportgerät**

(30) Priorität: 21.01.2009 DE 102009006509
(71) Anmelder: TKMS Blohm + Voss Nordseewerke GmbH, 20457 Hamburg (DE)
(72) Erfinder: Sperling, Thomas, 22083 Hamburg (DE); Gilges, Florian, 20257 Hamburg (DE)
(74) Vertreter: Hansmann, Dierk

(57) **Zusammenfassung**

Es wird zur Überwindung von Hindernissen vorgeschlagen, daß zwei Transportwagen hintereinander angeordnet und die Transportflächen durch eine Scharnierverbindung verbunden sind. Hierbei wird im Verbindungsbereich ein Freiraum höher und breiter als das Hindernis gebildet. Ein Transportgut wird nur auf einer Transportfläche aufgenommen und die freie Transportfläche wird mit dem Transportwagen im Winkel hochgestellt und nach Überwindung des Hindernisses zurückgeschwenkt, wobei das Transportgut entsprechend verschoben wird.

## Beschreibung

Die Erfindung bezieht sich auf ein Transportgerät in Form eines Transportwagens zur Überwindung von Hindernissen, wie Türsülle auf Schiffen, mit einer Transportfläche zur Aufnahme von Gütern.

Beim Einsatz von Transportwagen auf Schiffen mit entsprechenden Türsüllen hat sich gezeigt, daß es aufwendig ist, relativ schwere Güte zu transportieren und über die Hindernisse hinwegzuheben. Der Einsatz von üblichen Transportwagen ist deshalb nicht möglich.

Die Aufgabe der Erfindung ist es, eine robuste Anordnung zu schaffen, die eine Verwendung üblicher Transportwagen für eine Überwindung von Hindernissen auf einfache Weise ermöglicht.

Die Lösung dieser Aufgabe erfolgt erfindungsgemäß dadurch, daß zwei Transportwagen hintereinander angeordnet und die Transportflächen durch eine Scharnierverbindung verbunden sind sowie unterhalb eines Verbindungsbereiches der Transportflächen ein Freiraum höher und breiter als das Hindernis gebildet ist, wobei eine Transportfläche eines Transportwagens Güter aufnimmt sowie eine dem Hindernis zugewandte freie Transportfläche des weiteren Transportwagens im Winkel hochstellbar und die freie Transportfläche hinter dem Hindernis zum Versetzen der Güter auf die freie Transportfläche zurückschwenkbar sowie anschließend die freigewordene Transportfläche verschwenkbar ist.

Hierdurch ist es möglich, mit einfachen Mitteln ein funktionsfähiges Transportgerät zu schaffen, das eine Ausbildung ohne Fremdenergie ermöglicht und eine mechanische Lösung als robuste wartungsfreie Anordnung schafft.

Eine vorteilhafte Ausbildung wird dadurch geschaffen, daß die verschwenkbaren Transportflächen mit dem Transportwagen jeweils um etwa 90 Grad verstellbar sind.

Ferner wird vorgeschlagen, daß die Transportflächen unter Zwischenschaltung des Scharniers eine durchgängige Fläche zum Verschieben der Transportgüter bildet.

In der Zeichnung ist ein Ausführungsbeispiel der Erfindung schematisch dargestellt. Es zeigen:

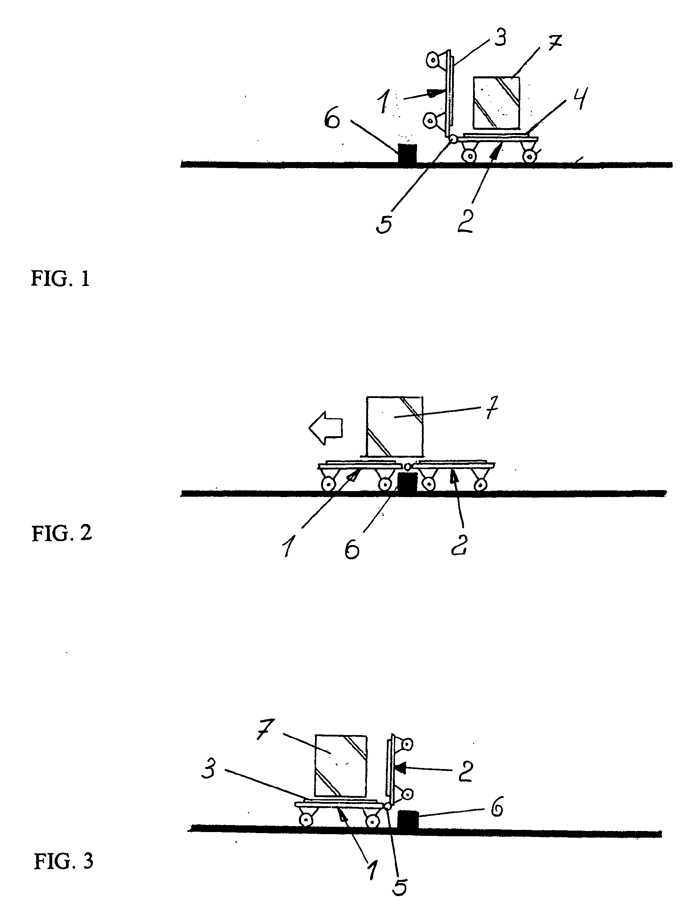

- Fig. 1: ein Transportgerät vor einem Hindernis mit hochgestellter vorderer Transportfläche;
- Fig. 2: eine Darstellung wie Fig. 1 mit zurückgeschwenkter vorderer Transportfläche und Aufnahme des Hindernisses im Freiraum zur Verschiebung des aufgenommenen Gutes auf die vordere Transportfläche und
- Fig. 3: ein Transportgerät nach Überwindung eines Hindernisses mit hochgestellter hinterer Transportfläche

Das dargestellte Transportgerät besteht aus zwei hintereinander angeordneten üblichen Transportwagen 1, 2 mit zugeordneten Transportflächen 3, 4, die im Bereich der benachbarten Transportflächen 3, 4 über ein Scharnier 5 verbunden sind. Hierdurch sind die Transportwagen 1, 2 mit ihren Transportflächen 3, 4 jeweils hochklappbar und in eine hochgestellte Lage an jeweils anderen Transportwagen einstellbar.

Zwischen den Transportwagen 1, 2 unterhalb des durch das Scharnier 5 gebildeten Verbindungsbereiches ist ein Freiraum höher und breiter als ein zu überwindendes Hindernis 6 ausgebildet.

Zum Überwinden des Hindernisses 6 wird der dem Hindernis 6 zugewandte Transportwagen 1 mit seiner Transportfläche 3 über das Scharnier 5 hochgeklappt und gegebenenfalls in dieser Stellung verriegelt. Die Transportfläche 4 mit dem Transportwagen 2 nimmt dabei das zu transportierende Gut 7 auf.

Nach Erreichen des Hindernisses 6 wird die hochgestellte Transportfläche 3 wieder auf den Boden zurückgeschwenkt, wobei das Hindernis 6 zwischen den Transportwagen 1, 2 aufgenommen wird. Das aufgenommene Gut 7 wird auf die freie Transportfläche 4 geschoben und die Transportfläche 3 mit den Transportwagen 2 hochgeklappt, so daß das Hindernis 6 überwunden wird und der Transport fortsetzbar ist.

## Patentansprüche

1. Transportgerät in Form eines Transportwagens zur Überwindung von Hindernissen, wie Türsülle auf Schiffen mit einer Transportfläche zur Aufnahme von Gütern, **dadurch gekennzeichnet, daß** zwei Transportwagen (1, 2) hintereinander angeordnet und die Transportflächen (3, 4) durch eine Scharnierverbindung (5) verbunden sind sowie unterhalb eines Verbindungsbereiches der Transportflächen (3, 4) ein Freiraum höher und breiter als das Hindernis (6) gebildet ist, wobei eine Transportfläche (4) eines Transportwagens (2) Güter (7) aufnimmt sowie eine dem Hindernis (6) zugewandte freie Transportfläche (3) des weiteren Transportwagens (1) im Winkel hochstellbar und die freie Transportfläche (3) hinter dem Hindernis (6) zum Versetzen der Güter (7) auf die freie Transportfläche (3) zurückschwenkbar sowie anschließend die freigewordene Transportfläche (4) verschwenkbar ist.

2. Transportgerät nach Anspruch 1, **dadurch gekennzeichnet, daß** die verschwenkbaren Transportflächen (3, 4) mit dem Transportwagen (1, 2) jeweils um etwa 90 Grad verstellbar sind.

3. Transportgerät nach Anspruch 1 oder 2, **dadurch gekennzeichnet, daß** die Transportflächen (3, 4) unter Zwischenschaltung des Scharniers (5) eine durchgängige Fläche zum Verschieben der Transportgüter bildet.
